# EUROPEAN PATENT SPECIFICATION

(11) **EP 3 539 772 B1**
(45) Date of publication and mention of the grant of the patent: **18.11.2020**
(21) Application number: 19152954.4
(22) Date of filing: 22.01.2019
(51) Int. Cl.: B32B 38/18, B32B 37/20, H01M 4/64, H01M 2/26, B29C 65/08, B23K 20/10

(54) **PROCESSING APPARATUS FOR SECONDARY BATTERY CURRENT COLLECTOR**
VERARBEITUNGSVORRICHTUNG FÜR SEKUNDÄRBATTERIESTROMABNEHMER
APPAREIL DE TRAITEMENT DE COLLECTEUR DE COURANT POUR BATTERIE SECONDAIRE

(30) Priority: 15.03.2018 CN 201820356787 U
(43) Date of publication of application: 18.09.2019
(73) Proprietor: Contemporary Amperex Technology Co., Limited, Ningde, Fujian 352100 (CN)
(72) Inventor: WU, Congmiao, Ningde, Fujian 352100 (CN); LIN, Jinwei, Ningde, Fujian 352100 (CN); ZHOU, Long, Ningde, Fujian 352100 (CN); ZHANG, Xichong, Ningde, Fujian 352100 (CN); LI, Keqiang, Ningde, Fujian 352100 (CN); WU, Zuyu, Ningde, Fujian 352100 (CN)
(74) Representative: Savini, Stefania

(56) References cited:
- EP-A1- 1 719 605
- EP-A1- 3 165 321
- CN-U- 207 038 628

## Description

### TECHNICAL FIELD

The present disclosure relates to the field of energy storage device processing technologies, and in particular, to a processing apparatus for a secondary battery current collector.

### BACKGROUND

In lithium batteries, an aluminum foil is usually adopted as a positive current collector, and a copper foil is adopted as a negative current collector. With the continuous development of the battery industry, a current collector with better performance can be adopted.

Processing apparatuses for secondary battery current collectors are for instance known from documents CN 207038628 U and EP 3 165 321 A1.

### SUMMARY

With the continuous development of the battery industry, there has been a current collector with better performance, that is, a composite current collector composed of high polymer and metal. The composite current collector can reduce the temperature rise of the battery, reduce the risk of thermal runaway, and improve the safety of the battery. However, since the composite current collector includes an insulating layer made of a high polymer material, a tab of the composite current collector cannot output current in a battery cell to an electrode terminal. It is required to use a foil (an aluminum foil or a copper foil) to connect with the tab of the composite current collector such that the current in the battery cell is output.

The present disclosure provides a processing apparatus for a secondary battery current collector, which can achieve the connection of the foil with the tab of the composite current collector so as to output the current in the battery cell.

The present disclosure provides a processing apparatus for a secondary battery current collector. The processing apparatus includes: a foil uncoiling roller; a composite current collector uncoiling roller; a welding device; a plurality of driving rollers; and a coiling roller. Both the foil uncoiling roller and the composite current collector uncoiling roller are disposed on a feeding side of the welding device. The welding device is configured to weld the foil to a portion of a composite current collector. The plurality of driving rollers is respectively disposed on the feeding side and a discharging side of the welding device and has an equal line speed. The plurality of driving rollers is configured to drive the foil and the composite current collector after being overlapped with each other to downstream. The coiling roller is configured to wind up the composite current collector having the foil welded thereon.

In an embodiment, the processing apparatus further includes a synchronous transmission device. Each of the plurality of driving rollers is coupled to the synchronous transmission device in a transmission way.

In an embodiment, the processing apparatus further includes a plurality of driven rollers. The plurality of driving rollers is disposed in one-to-one correspondence with the plurality of driven rollers, the overlapped foil and composite current collector pass through between the plurality of driving rollers and the plurality of driven rollers, and the plurality of driving rollers drives the plurality of driven rollers to rotate to jointly convey the foil and the composite current collector.

According to the invention, at least two driving rollers of the plurality of driving rollers are arranged in a horizontal direction and the welding device is located between two of the at least two driving rollers arranged in the horizontal direction.

In an embodiment, the welding device is configured to continuously weld the foil to a portion of the composite current collector.

In an embodiment, the welding device is configured as an ultrasonic rolling welding device including an ultrasonic welding head and an anvil block, and the ultrasonic welding head and the anvil block are in rolling contact during welding.

In an embodiment, the processing apparatus further includes a driving device. One of the ultrasonic welding head and the anvil block is coupled to the driving device in a transmission way to adjust a contact force therebetween during welding.

In an embodiment, the processing apparatus further includes a pressure roller configured to press one of the foil and the composite current collector to the other of the foil and the composite current collector to make the foil and the composite current collector overlap. The pressure roller is disposed on the feeding side of the welding device.

In an embodiment, the processing apparatus further includes a rectifying device configured to rectify a position offset of the foil from the composite current collector. The rectifying device is disposed on a feeding side of the pressure roller.

In an embodiment, the processing apparatus further includes a tension adjusting device. The tension adjusting device is movably disposed to adjust tension of the foil and the composite current collector.

The technical aspect provided by the present disclosure can achieve the following beneficial effects.

The present disclosure provides a processing apparatus for a secondary battery current collector. The welding device is provided with a driving roller both at its discharging side and feeding side, and the driving rollers have equal line speeds. The welding device can weld the foil to a portion of the composite current collector, so that the foil can be used as a tab of the composite current collector and the current in the battery cell can be output with the transfer of the foil.

It should be understood that the above general description is merely illustrative, but not intended to limit the present disclosure.

### BRIEF DESCRIPTION OF DRAWINGS

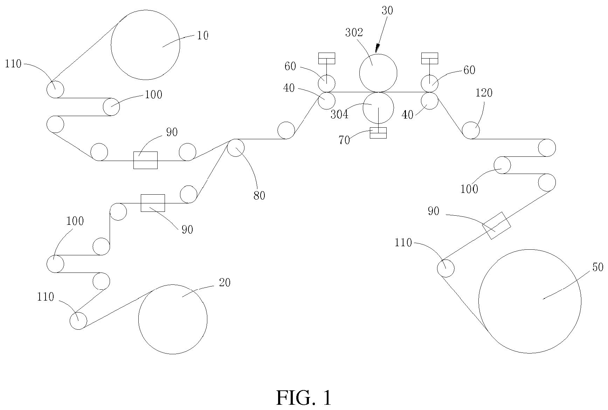

FIG. 1 is a schematic diagram of a processing apparatus for a secondary battery current collector according to an embodiment of the present disclosure.

### Reference Signs:

10-foil uncoiling roller;
20-composite current collector uncoiling roller;
30-welding device;
302-ultrasonic welding head;
304- anvil block;
40-driving roller;
50-coiling roller;
60-driven roller;
70-driving device;
80-pressure roller;
90-rectifying device;
100-tension adjusting device;
110- conveying roller.

Accompanying drawings illustrating embodiments according to the present disclosure are incorporated in the description as a part, and used to elaborate the principle of the present disclosure.

### DESCRIPTION OF EMBODIMENTS

The present disclosure will be further described below by specific embodiments of the present disclosure in combination with the drawings.

It should be understood that terms indicating orientations or positions, such as "up", "down", "left", "right", etc., generally are used to describe the orientations or positions with reference to the drawings, and thus should not be construed as a limitation to the embodiments of the present disclosure. It also should be understood that when an element is referred as being "on" or "under" another element, the element can be directly located "on" or "under" another element or connected to another element with an intermediate element.

The present disclosure provides a processing apparatus for a secondary battery current collector for processing a secondary battery current collector which can be used as a substrate for an electrode plate.

Specifically, as shown in FIG. 1, the processing apparatus includes a foil uncoiling roller 10, a composite current collector uncoiling roller 20, a welding device 30, a plurality of driving rollers 40, and a coiling roller 50. The foil uncoiling roller 10 is used for uncoiling the foil, and the composite current collector uncoiling roller 20 is used for uncoiling the composite current collector. Both the foil uncoiling roller 10 and the composite current collector uncoiling roller 20 are disposed on a feeding side of the welding device 30, and the welding device 30 is configured to weld the foil to a portion of the composite current collector.

The plurality of driving rollers 40 is respectively disposed on the feeding side and a discharging side of the welding device 30. The plurality of driving rollers 40 can drive the overlapped foil and composite current collector to be conveyed to the welding device 30 and convey the foil and the composite current collector downstream after welding.

The plurality of driving rollers 40 is disposed in such a manner that line speeds are equal. In this way, a difference in conveying speeds of the foil and the composite current collector before and after the welding is reduced, so that fluctuation in the speed is relatively small when the foil and the composite current collector are being welded, thereby improving the welding quality.

A coiling roller 50 is disposed at an end of an assembly line of the processing apparatus and used for coiling the welded foil and composite current collector. The welded foil and composite current collector can be used as a substrate for an electrode plate, in which the foil can be used as a tab.

According to the description above, the welding device 30 can weld the foil to a portion of the composite current collector so that the foil can be used as a tab of the composite current collector, and the current in the battery cell can be output through transfer of the foil.

The driving roller 40 can be driven by a driving mechanism such as a motor. In one embodiment, each driving roller 40 is equipped with a motor.

In the present embodiment, in order to simplify the structure, the processing apparatus further includes a synchronous transmission device (not shown), and the synchronous transmission device is coupled to the respective driving roller 40 in a transmission way in order to achieve synchronous rotation of each driving roller 40. Thus, when diameters of the respective driving rollers 40 are equal, line speeds of the respective driving rollers 40 tend to be consistent under driving of a same motor, and the structure is more compact.

The synchronous transmission device can adopt a rack, a chain, a toothed belt and the like, and correspondingly, each of the driving rollers 40 needs to be provided with a gear, a sprocket, a pulley and the like to match therewith.

In order to achieve more stable conveying of the foil and the composite current collector, the processing apparatus may further include multiple driven rollers 60, and the driven roller 60 is disposed to be in one-to-one correspondence with the driving roller 40. The foil and the composite current collector pass through between the driven roller 60 and the driving roller 40, the driven roller 60 can apply pressure to the foil and the composite current collector, and the foil and the composite current collector are jointly conveyed with the driving of the driving roller 40 so as to reduce the difference in speeds of the foil and the composite current collector.

According to the invention, as shown in FIG. 1, two driving rollers 40 are provided, and the two driving rollers 40 are arranged in a horizontal direction, while the welding device 30 is disposed between the two driving rollers 40. Thus, on the feeding side and the discharging side of the welding device 30, the foil and the composite current collector can be conveyed at a constant speed in the horizontal direction, thereby avoiding the relative misalignment between the foil and the composite current collector due to the change of the conveying direction and thus improving the welding quality.

Of course, the number of driving rollers 40 is not limited to two, but may be more. At this time, the two driving rollers 40 respectively disposed on the feeding side and the discharging side of the welding device 30 and adjacent to the welding device 30 may be arranged in the horizontal direction.

It should be noted that, it is necessary to ensure that there is a certain wrap angle on the driving roller 40 when feeding, in order to increase the friction of the running belt without slipping. The foil and the composite current collector should be in close contact with the driving roller 40, such that it is not easy for them to deviate, ensuring the dimensional accuracy of the welding.

The foil and the composite current collector may be laser-welded, that is, the welding device 30 is a laser welding device, but is not limited thereto. In the present embodiment, the foil and the composite current collector are ultrasonic-welded. When the foil and the composite current collector have arrived at the ultrasonic welding station, the welding device can apply force to the foil and the composite current collector by vibration, and the foil and the composite current collector rub against each other and fuse together.

Ultrasonic welding can effectively penetrate a plastic layer in the middle of the composite current collector, and fuse the foil with metal layers on both sides of the plastic layer to increase the thickness of the metal, so that the current in the battery cell can be reliably output from the fusion portion.

In addition, the foil may be continuously welded to the composite current collector in the welding process in order to improve the welding efficiency. That is, the foil and the composite current collector are welded during the conveying process such that continuous welding marks are formed on them, and the conveying process can be performed without a pause.

According to an exemplary embodiment, the welding device 30 is configured as an ultrasonic rolling welding device in the present disclosure. Specifically, the ultrasonic rolling welding device includes an ultrasonic welding head 302 and an anvil block 304 which are respectively configured as cylinders so as to rotate with respect to each other, thereby achieving rolling contact. Thus, during the welding process, the foil and the composite current collector can be continuously conveyed between the ultrasonic welding head 302 and the anvil block 304, and the foil and the composite current collector can be continuously ultrasonic-welded.

It should be understood that the manner in which continuous welding is achieved is not limited to that described above and other embodiments are optional and will not be described in detail herein.

Further, multiple extrusion welding teeth (not shown in the drawings) may be arranged on the circumferential face of the ultrasonic welding head 302, and the welding teeth may be configured as a tapered tooth structure which is similar to a gear structure. The anvil block 304 can be surface smoothed to reduce damage to the foil and the composite current collector during welding. At this time, the ultrasonic welding head 302 serves as a welding tooth portion and the anvil block 304 serves as a non-welding tooth portion.

During the welding process, the extrusion welding teeth extrude the foil and the composite current collector and penetrate the plastic layer of the composite current collector. The foil is stretched under the action of the pressing force of the extrusion welding teeth, and is respectively fused with the metal layers on the upper and lower sides of the plastic layer, and thus the foil can be welded more sufficiently with the composite current collector.

Of course, the extrusion welding teeth are not limited to being disposed on the circumferential face of the ultrasonic welding head 302. Alternatively, the extrusion welding teeth may be disposed on the circumferential face of the anvil block 304. Accordingly, the ultrasonic welding head 302 can be surface smoothed. In this case, the anvil block 304 serves as a welding tooth portion and the ultrasonic welding head 302 serves as a non-welding tooth portion.

As shown in FIG. 1, the processing apparatus may further include a driving device 70, and one of the ultrasonic welding head 302 and the anvil block 304 may be coupled to the driving device 70 in a transmission way such that the contact force generated when the ultrasonic welding head 302 is in contact with the anvil block 304 can be adjusted to ensure the fusion degree of the foil and the composite current collector during welding, thereby improving the welding quality. In the present embodiment, the driving device 70 is a cylinder, but is not limited thereto.

It is easy to understand that both the foil and the composite current collector are made of thin materials, which may have low strength and may not withstand large tearing force. Therefore, it is required that the relative position of the foil and the composite current collector is maintained to be fixed during welding so as to reduce the speed difference therebetween. Otherwise, cracks may occur after welding, and in severe cases, strip breakage may occur such that the production cannot be performed continuously.

In the present disclosure, in order to ensure the welding quality, the processing apparatus further includes a pressure roller 80 which is disposed on the feeding side of the welding device 30. The pressure roller 80 can press one of the foil and the composite current collector to the other such that the two overlap with each other at the pressure roller 80. In this case, the pressure roller 80 is configured to be rotatable.

Further, the pressure roller 80 is disposed on the feeding side of the driving roller 40 such that before being conveyed to the driving roller 40, the foil and the composite current collector can be superposed to further reduce the speed difference between the foil and the composite current collector.

In an embodiment, the processing apparatus may further include a rectifying device 90, and the rectifying device 90 is disposed on the feeding side of the pressure roller 80. The rectifying device 90 is used to rectify the overlapping position of the foil relative to the composite current collector, so as to avoid a large position offset when they overlap.

According to an exemplary embodiment, the rectifying device 90 may be configured as a rectifying roller. The foil and the composite current collector are wrapped around the rectifying roller during the conveying process. The rectifying roller can control and drive the foil and the composite current collector to make a slight movement in a direction different from the conveying direction by a program in order to rectify the offset of the foil and composite current collector during the conveying process, such that the overlapped foil and the composite current collector can overlap at a predetermined position to meet the dimensional requirements at the time of overlapping.

Further, it is also feasible to provide a rectifying device 90 on the feeding side of the coiling roller 50 to rectify the offset amount of a substrate for an electrode plate wound around the coiling roller 50.

During the discharging process, it is also required to control the tension of the foil and the composite current collector. Therefore, the processing apparatus may further include a tension adjusting device 100, and the tension adjusting device 100 may be configured as a tension adjusting roller. The tension adjusting roller is movably disposed in the conveying path of the foil and the composite current collector, and the tension adjusting roller can control actions by a program so as to achieve an object of adjusting the tension.

The processing apparatus further includes a conveying roller 110 that can change the conveying direction of the foil and the composite current collector to appropriately arrange the occupying space of the processing apparatus.

## Claims

1. A processing apparatus for a secondary battery current collector, **characterized in** comprising:
a foil uncoiling roller (10);
a composite current collector uncoiling roller (20);
a welding device (30);
a plurality of driving rollers (40); and
a coiling roller (50),
wherein both the foil uncoiling roller (10) and the composite current collector uncoiling roller (20) are disposed on a feeding side of the welding device (30), the welding device (30) being configured to weld a foil to a portion of a composite current collector,
the plurality of driving rollers (40) is respectively disposed on the feeding side and a discharging side of the welding device (30) and has an equal line speed, the plurality of driving rollers (40) being configured to drive the foil and the composite current collector after being overlapped with each other to downstream, and
the coiling roller (50) is configured to wind up the composite current collector having the foil welded thereon,
two adjacent driving rollers of the plurality of driving rollers (40) are arranged on the feeding side and the discharging side of the welding device (30) in a horizontal direction.

2. The processing apparatus according to claim 1, **characterized in** further comprising a synchronous transmission device, each of the plurality of driving rollers (40) being coupled to the synchronous transmission device in a transmission way.

3. The processing apparatus according to claim 1 or 2, **characterized in** further comprising a plurality of driven rollers, wherein the plurality of driving rollers is disposed in one-to-one correspondence with the plurality of driven rollers, the overlapped foil and composite current collector pass through between the plurality of driving rollers and the plurality of driven rollers, and the plurality of driving rollers drives the plurality of driven rollers to rotate to jointly convey the foil and the composite current collector.

4. The processing apparatus according to any one of claims 1 to 3, **characterized in that** the welding device (30) is configured to continuously weld the foil to a portion of the composite current collector.

5. The processing apparatus according to claim 4, **characterized in that** the welding device (30) is configured as an ultrasonic rolling welding device (30) comprising an ultrasonic welding head (302) and an anvil block (304), and the ultrasonic welding head (302) and the anvil block (304) are in rolling contact during welding.

6. The processing apparatus according to claim 5, **characterized in** further comprising a driving device (70), wherein one of the ultrasonic welding head (302) and the anvil block (304) is coupled to the driving device (70) in a transmission way to adjust a contact force therebetween during welding.

7. The processing apparatus according to any one of claims 1 to 6, **characterized in** further comprising a pressure roller (80) configured to press one of the foil and the composite current collector to the other of the foil and the composite current collector to make the foil and the composite current collector overlap, wherein the pressure roller (80) is disposed on the feeding side of the welding device (30).

8. The processing apparatus according to claim 7, **characterized in** further comprising a rectifying device (90) configured to rectify a position offset of the foil from the composite current collector, wherein the rectifying device (90) is disposed on a feeding side of the pressure roller (80).

9. The processing apparatus according to any one of claims 1 to 6, **characterized in** further comprising a tension adjusting device (100), wherein the tension adjusting device (100) is movably disposed to adjust tension of the foil and the composite current collector.

## Patentansprüche

1. Verarbeitungsvorrichtung für einen Stromkollektor für eine wiederaufladbare Batterie, **dadurch gekennzeichnet, dass** sie Folgendes aufweist:
eine Folienabwickelrolle (10);
eine Verbundstromkollektorabwickelrolle (20);
eine Schweißeinrichtung (30);
eine Mehrzahl von antreibenden Rollen (40) und
eine Wickelrolle (50),
wobei sowohl die Folienabwickelrolle (10) als auch die Verbundstromkollektorabwickelrolle (20) auf einer Zuführseite der Schweißeinrichtung (30) angeordnet sind, wobei die Schweißeinrichtung (30) dazu ausgebildet ist, eine Folie auf einen Bereich eines Verbundstromkollektors aufzuschweißen,
wobei die Mehrzahl von antreibenden Rollen (40) jeweils auf der Zuführseite angeordnet sind und eine Ausgabeseite der Schweißeinrichtung (30) eine gleiche Fördergeschwindigkeit aufweist, wobei die Mehrzahl von antreibenden Rollen (40) dazu ausgebildet ist, die Folie und den Verbundstromkollektors nach der Überlappung miteinander in Richtung stromabwärts anzutreiben, und
wobei die Wickelrolle (50) dazu ausgebildet ist, den Verbundstromkollektor mit der darauf geschweißten Folie aufzuwickeln,
wobei zwei angrenzende antreibende Rollen der Mehrzahl von antreibenden Rollen (40) auf der Zuführseite und der Ausgabeseite der Schweißeinrichtung (30) in einer horizontalen Richtung angeordnet sind.

2. Verarbeitungsvorrichtung nach Anspruch 1, **dadurch gekennzeichnet, dass** sie ferner eine synchrone Übertragungseinrichtung aufweist, wobei jede der Mehrzahl von antreibenden Rollen (40) mit der synchronen Antriebseinrichtung in einer übertragenden Weise gekoppelt ist.

3. Verarbeitungsvorrichtung nach Anspruch 1 oder 2, **dadurch gekennzeichnet, dass** sie ferner eine Mehrzahl von angetriebenen Rollen aufweist, wobei die Mehrzahl von antreibenden Rollen in einer eins-zu-eins-Zuordnung mit der Mehrzahl von angetriebenen Rollen angeordnet ist, wobei die überlappende Folie und der Verbundstromkollektor zwischen der Mehrzahl von antreibenden Rollen und der Mehrzahl von angetriebenen Rollen durchgehen, und wobei die Mehrzahl von antreibenden Rollen die Mehrzahl von angetriebenen Rollen antreibt, um die Folie und den Verbundstromkollektor gemeinsam anzutreiben.

4. Verarbeitungsvorrichtung nach irgendeinem der Ansprüche 1 bis 3, **dadurch gekennzeichnet, dass** die Schweißeinrichtung (30) dazu ausgebildet ist, die Folie mit einem Teil des Verbundstromkollektors kontinuierlich zu verschweißen.

5. Verarbeitungsvorrichtung nach Anspruch 4, **dadurch gekennzeichnet, dass** die Schweißeinrichtung (30) als eine Ultraschall-Rollschweißeinrichtung (30) ausgebildet ist, die einen Ultraschallschweißkopf (302) und einen Ambossblock (304) aufweist, und wobei der Ultraschallschweißkopf (302) und der Ambossblock (304) während des Schweißens in rollendem Kontakt sind.

6. Verarbeitungsvorrichtung nach Anspruch 5, **dadurch gekennzeichnet, dass** sie ferner eine Antriebseinrichtung (70) aufweist, wobei eine von dem Ultraschallschweißkopf (302) und dem Ambossblock (304) mit der Antriebseinrichtung (70) in einer übertragenen Weise gekoppelt ist, um während des Schweißens dazwischen eine Kontaktkraft einzustellen.

7. Schweißvorrichtung nach irgendeinem der Ansprüche 1 bis 6, ferner **dadurch gekennzeichnet, dass** sie eine Druckrolle (80) aufweist, die ausgebildet ist, um auf das andere von der Folie und dem gemeinsamen Stromkollektor zu pressen, um die Folie und den gemeinsamen Stromkollektor zu überlappen, wobei die Druckrolle (80) auf der Zuführseite der Schweißeinrichtung (30) angeordnet ist.

8. Verarbeitungsvorrichtung nach Anspruch 7, **dadurch gekennzeichnet, dass** sie ferner eine Korrektureinrichtung (90) aufweist, die dazu ausgebildet ist, eine Offset-Position der Folie gegenüber dem Verbundstromkollektor zu korrigieren, wobei die Korrektureinrichtung (90) an einer Zuführseite der Druckrolle (80) angeordnet ist.

9. Verarbeitungsvorrichtung nach irgendeinem der Ansprüche 1 bis 6, ferner **dadurch gekennzeichnet, dass** sie eine Zugeinstelleinrichtung (100) aufweist, wobei die Zugeinstelleinrichtung (100) beweglich angeordnet ist, um den Zug der Folie und des Verbundstromkollektors einzustellen.

## Revendications

1. Appareil de traitement pour un collecteur de courant de batterie secondaire, **caractérisé en ce qu'**il comprend:
un rouleau de débobinage de feuille (10);
un rouleau de débobinage de collecteur de courant composite (20);
un dispositif de soudage (30);
une pluralité de rouleaux d'entraînement (40); et
un rouleau de bobinage (50),
dans lequel le rouleau de débobinage de feuille (10) et le rouleau de débobinage de collecteur de courant composite (20) sont disposés tous les deux sur un côté alimentation du dispositif de soudage (30), le dispositif de soudage (30) étant configuré pour souder une feuille sur une partie d'un collecteur de courant composite,
la pluralité de rouleaux de bobinage (40) est disposée respectivement sur le côté alimentation et sur un côté déchargement du dispositif de soudage (30) et a une vitesse de ligne égale, la pluralité de rouleaux d'entraînement (40) étant configurée pour entraîner la feuille et le collecteur de courant composite après qu'ils se sont recouverts mutuellement vers l'aval, et
le rouleau de bobinage (50) est configuré pour enrouler le collecteur de courant composite ayant la feuille soudée sur lui,
deux rouleaux d'entraînement adjacents de la pluralité de rouleaux d'entraînement (40) sont disposés sur le côté alimentation et sur le côté déchargement du dispositif de soudage (30) dans une direction horizontale.

2. Appareil de traitement selon la revendication 1, **caractérisé en ce qu'**il comprend en outre un dispositif de transmission synchrone, chacun de la pluralité de rouleaux d'entraînement (40) étant couplé au dispositif de transmission synchrone à la manière d'une transmission.

3. Appareil de traitement selon la revendication 1 ou 2, **caractérisé en ce qu'**il comprend en outre une pluralité de rouleaux entraînés, dans lequel la pluralité de rouleaux d'entraînement est disposée dans une correspondance un à un de la pluralité de rouleaux entraînés, la feuille et le collecteur de courant composite qui se recouvrent passent entre la pluralité de rouleaux d'entraînement et la pluralité de rouleaux entraînés, et la pluralité de rouleaux d'entraînement entraîne la pluralité de rouleaux entraînés pour tourner pour transporter de manière réunie la feuille et le collecteur de courant composite.

4. Appareil de traitement selon l'une quelconque des revendications 1 à 3, **caractérisé en ce que** le dispositif de soudage (30) est configuré pour souder en continu la feuille à une partie du collecteur de courant composite.

5. Appareil de traitement selon la revendication 4, **caractérisé en ce que** le dispositif de soudage (30) est configuré comme un dispositif de soudage à roulement ultrasonique (30) comprenant une tête de soudage ultrasonique (302) et un bloc d'enclume (304), et la tête de soudage ultrasonique (302) et le bloc d'enclume (304) sont en contact de roulement pendant le soudage.

6. Appareil de traitement selon la revendication 5, **caractérisé en ce qu'**il comprend en outre un dispositif d'entraînement (70), dans lequel l'un de la tête de soudage ultrasonique (302) et du bloc d'enclume (304) est couplé au dispositif d'entraînement (70) à la manière d'une transmission pour régler une force de contact entre les deux pendant le soudage.

7. Appareil de traitement selon l'une quelconque des revendications 1 à 6, **caractérisé en ce qu'**il comprend en outre un rouleau de pression (80) configuré pour presser l'un de la feuille et du collecteur de courant composite contre l'autre de la feuille et du collecteur de courant composite pour les faire se recouvrir, dans lequel le rouleau de pression (80) est disposé sur le côté alimentation du dispositif de soudage (30).

8. Appareil de traitement selon la revendication 7, **caractérisé en ce qu'**il comprend en outre un dispositif de rectification (90) configuré pour rectifier un décalage de position de la feuille par rapport au collecteur de courant composite, dans lequel le dispositif de rectification (90) est disposé sur un côté alimentation du rouleau de pression (80).

9. Appareil de traitement selon l'une quelconque des revendications 1 à 6, **caractérisé en ce qu'**il comprend en outre un dispositif de réglage de tension (100), dans lequel le dispositif de réglage de tension (100) est disposé mobile pour régler la tension de la feuille et du collecteur de courant composite.
